# EUROPEAN PATENT SPECIFICATION

(11) **EP 2 925 051 B1**
(45) Date of publication and mention of the grant of the patent: **24.04.2019**
(21) Application number: 12890752.4
(22) Date of filing: 27.12.2012
(51) Int. Cl.: H04W 36/00, H04W 24/04, H04W 88/08, H04W 92/14

(54) **METHOD, DEVICE AND WIRELESS COMMUNICATION SYSTEM FOR DUAL-NETWORK BACKUP**
VERFAHREN, VORRICHTUNG UND DRAHTLOSES KOMMUNIKATIONSSYSTEM FÜR DUALNETZWERKSICHERUNG
PROCÉDÉ, DISPOSITIF ET SYSTÈME DE COMMUNICATION SANS FIL POUR LA SAUVEGARDE DE DOUBLE RÉSEAU

(43) Date of publication of application: 30.09.2015
(73) Proprietor: Huawei Technologies Co., Ltd., Longgang District Shenzhen, Guangdong 518129 (CN)
(72) Inventor: WANG, Liyi, Shenzhen Guangdong 518129 (CN); HUANG, Ting, Shenzhen Guangdong 518129 (CN); WEI, Zhongshan, Shenzhen Guangdong 518129 (CN)
(74) Representative: Thun, Clemens
(86) International application number: PCT/CN2012/087641
(87) International publication number: WO 2014/101037

(56) References cited:
- EP-A1- 1 983 777
- EP-A1- 2 445 244
- WO-A1-2012/089025
- CN-A- 1 984 424
- CN-A- 1 984 424
- CN-A- 101 466 158
- CN-A- 101 646 183
- CN-A- 101 931 958
- US-A1- 2007 190 996

## Description

### TECHNICAL FIELD

Embodiments of the present invention relate to the field of wireless communications, and more specifically, to a method and a device for dual network backup and a wireless communications system.

### BACKGROUND

With the rapid development of communications technologies, mobile data services increase sharply, and how to ensure mobile network reliability is an important issue that an operator faces. Particularly, some private networks, such as a Global System for Mobile Communications Railway (GSMR, GSM Railway), impose higher requirements on the mobile network reliability.
For example, EP 2 445 244A1 refers a technology increasing the reliability of mobile networks. A radio communications node broadcasts a primary radio network code that indicates that subscribed mobile user equipment terminals may obtain service from a primary PLMN operator. Further, the node may receive an instruction to broadcast a standby radio network code during a standby mode of operation. During the standby mode of operation, second mobile user equipment terminals that are not subscribed may obtain radio communications service from the primary PLMN operator.

As another example, in WO2012089025 A1, the control of a cell can be switched between an active base station controller (BSC) and a standby BSC. According to the backup strategy, the configuration information of the cell under the control of the active BSC may be backed up in the standby BSC in advance. Then, when a standby BSC determines that a cell under control of an active BSC needs to be controlled by the standby BSC, e.g., because of a failure of the active BSC, the standby BSC activates configuration information of the cell backed up, and controls the cell to provide communication services for a user equipment in the cell.

To improve the reliability, for a wireless network, a same area is covered by two layers of networks. Optionally, backup may be performed for a device at a base station level or base station controller level, and a working status is switched by enabling an active device or enabling a standby device, so as to implement coverage of two networks, namely, an active network and a standby network, on the same area. However, in the prior art, only one network works in a same period of time, and a dual network switchover is performed at least at the base station level. Therefore, normal working of a mobile network cannot be adequately ensured, and the mobile network reliability is not high enough.

### SUMMARY

In view of this, embodiments of the present invention provide a method and a device for dual network backup and a wireless communications system, to solve a problem that mobile network reliability is not high enough.

The invention is set out in the appended claims.

According to a first aspect, a method for dual network backup is provided, including: generating, by a device for dual network backup, a one-to-one correspondence between an active cell and a standby cell, where coverage areas of the active cell and the standby cell are the same, the active cell is managed by an active base station that is managed by an active base station controller, and the standby cell is managed by a standby base station that is managed by a standby base station controller; enabling, by the device for dual network backup, according to whether a current network is an active network or a standby network, corresponding carriers of the active cell and corresponding carriers of the standby cell to separately work; and querying, by the device for dual network backup, a network availability status, and performing, by the device for dual network backup, when it is determined that the network availability status meets a designated condition, a switchover between the active network and the standby network, wherein said switchover refers to a switchover between working statuses of the active cell of the active network and the standby cell of the standby network.

In a first possible implementation manner, different BCCH carriers are configured by the device for dual network backup for the active cell and the standby cell, where the BCCH carriers are carriers, which are used to send a broadcast channel, among cell carriers, and a carrier, except a BCCH carrier, among all carriers of one cell is a non-BCCH carrier.

With reference to the first possible implementation manner of the first aspect, in a second possible implementation manner, when the current network is the active network, the active base station controller enables all carriers of the active cell to work, and the standby base station controller enables a BCCH carrier of the standby cell to work and a non-BCCH carrier to skip working; or
when the current network is the standby network, the standby base station controller enables all carriers of the standby cell to work, and the active base station controller enables all carriers of the active cell to skip working.

With reference to the second possible implementation manner of the first aspect, in a third possible implementation manner, when the BCCH carrier of the standby cell is normal, an operation and maintenance link OML link of the standby base station controller of the standby cell is normal, an A-interface link of the standby base station controller is normal, and the standby base station controller is normal, a switchover from the active network to the standby network is performed if one of the following situations is met: a BCCH carrier of the active cell is faulty; the BCCH carrier of the active cell is normal, but an OML link of the active base station controller of the active cell is faulty, and a delay protection time for OML link interruption expires; and an A-interface link of the active base station controller is faulty, and the active base station controller is faulty.

With reference to the third possible implementation manner of the first aspect, in a fourth possible implementation manner, the active base station controller starts a switchover timer, switches a service of the active cell to a neighboring cell of the active cell, sends a switchover request to the standby base station controller, and starts a switchover waiting timer; after receiving the switchover request, the standby base station controller enables all the carriers of the standby cell to work, records a switchover alarm, and sends a switchover response to the active base station controller; after receiving the switchover response, the active base station controller stops the switchover waiting timer, and records a switchover alarm.

With reference to the second possible implementation manner of the first aspect, in a fifth possible implementation manner, a switchover is performed from the standby network to the active network when the standby network works, a BCCH carrier of the active cell is normal, an OML link of the active base station controller of the active cell is normal, and an A-interface link of the active base station controller is normal.

With reference to any one of the first to the fifth possible implementation manners of the first aspect, in a sixth possible implementation manner, the non-BCCH carrier of the standby cell is configured as a subset of non-BCCH carriers of the active cell.

With reference to the first aspect or the foregoing possible implementation manners of the first aspect, in a seventh possible implementation manner, the active base station controller and the standby base station controller are connected by using a same core network, or the active base station controller and the standby base station controller are connected by using different core networks.

According to a second aspect, a device for dual network backup is provided, including a generating unit, a control unit, and a switchover unit, where the generating unit is configured to generate a one-to-one correspondence between an active cell and a standby cell, where coverage areas of the active cell and the standby cell are the same, the active cell is managed by an active base station that is managed by an active device, and the standby cell is managed by a standby base station that is managed by a standby device; the control unit is configured to enable, according to whether a current network is an active network or a standby network, corresponding carriers of the active cell and corresponding carriers of the standby cell to separately work; and the switchover unit is configured to query a network availability status, and when it is determined that the network availability status meets a designated condition, perform a switchover between the active network and the standby network.

In a first possible implementation manner, the device further includes a configuring unit, where the configuring unit is configured to configure different BCCH carriers for the active cell and the standby cell, where the BCCH carriers are carriers, which are used to send a broadcast channel, among cell carriers, and a carrier, except a BCCH carrier, among all carriers of one cell is a non-BCCH carrier.

With reference to the first possible implementation manner of the second aspect, in a second possible implementation manner, when the current network is the active network, a control unit of the active device enables all carriers of the active cell to work, and a control unit of the standby device enables a BCCH carrier of the standby cell to work and a non-BCCH carrier to skip working; or when the current network is the standby network, a control unit of the standby device enables all carriers of the standby cell to work, and a control unit of the active device enables all carriers of the active cell to skip working.

With reference to the second possible implementation manner of the second aspect, in a third possible implementation manner, the switchover unit is specifically configured to: when the BCCH carrier of the standby cell is normal, an operation and maintenance link OML link of the standby device of the standby cell is normal, an A-interface link of the standby device is normal, and the standby device is normal, perform a switchover from the active network to the standby network if one of the following situations is met: a BCCH carrier of the active cell is faulty; the BCCH carrier of the active cell is normal, but an OML link of the active device of the active cell is faulty, and a delay protection time for OML link interruption expires; and an A-interface link of the active device is faulty, and the active device is faulty.

With reference to the second aspect or the foregoing possible implementation manners of the second aspect, in a fourth possible implementation manner, the device further includes a sending unit, a receiving unit, and a recording unit, where a switchover unit of the active device starts a switchover timer, and switches a service of the active cell to a neighboring cell of the active cell, a sending unit of the active device sends a switchover request to the standby device, and the switchover unit of the active device starts a switchover waiting timer; after a receiving unit of the standby device receives the switchover request, the control unit of the standby device enables all the carriers of the standby cell to work, a recording unit of the standby device records a switchover alarm, and a sending unit of the standby device sends a switchover response to the active device; after a receiving unit of the active device receives the switchover response, the switchover unit of the active device stops the switchover waiting timer, and a recording unit of the active device records a switchover alarm.

With reference to the second possible implementation manner of the second aspect, in a fifth possible implementation manner, a switchover unit of the standby device is configured to perform a switchover from the standby network to the active network when the standby network works, a BCCH carrier of the active cell is normal, an OML link of the active device of the active cell is normal, and an A-interface link of the active device is normal.

With reference to any one of the first to the fifth possible implementation manners of the second aspect, in a sixth possible implementation manner, the configuring unit configures the non-BCCH carrier of the standby cell as a subset of non-BCCH carriers of the active cell.

With reference to the second aspect or the foregoing possible implementation manners of the second aspect, in a seventh possible implementation manner, the active device and the standby device are connected by using a same core network, or the active device and the standby device are connected by using different core networks.

According to a third aspect, a device for dual network backup is provided, including a processor and a memory, where the memory is configured to store information that the processor executes the following method; and the processor is configured to: generate a one-to-one correspondence between an active cell and a standby cell, where coverage areas of the active cell and the standby cell are the same, the active cell is managed by an active base station that is managed by an active device, and the standby cell is managed by a standby base station that is managed by a standby device; enable, according to whether a current network is an active network or a standby network, corresponding carriers of the active cell and corresponding carriers of the standby cell to separately work; and query a network availability status, and when it is determined that the network availability status meets a designated condition, perform a switchover between the active network and the standby network.

In a first possible implementation manner, the processor is further configured to configure different BCCH carriers for the active cell and the standby cell, where the BCCH carriers are carriers, which are used to send a broadcast channel, among cell carriers, and a carrier, except a BCCH carrier, among all carriers of one cell is a non-BCCH carrier.

With reference to the first possible implementation manner of the third aspect, in a second possible implementation manner, when the current network is the active network, a processor of the active device enables all carriers of the active cell to work, and a processor of the standby device enables a BCCH carrier of the standby cell to work and a non-BCCH carrier to skip working; or when the current network is the standby network, a processor of the standby device enables all carriers of the standby cell to work, and a processor of the active device enables all carriers of the active cell to skip working.

With reference to the second possible implementation manner of the third aspect, in a third possible implementation manner, the processor is specifically configured to: when the BCCH carrier of the standby cell is normal, an operation and maintenance link OML link of the standby device of the standby cell is normal, an A-interface link of the standby device is normal, and the standby device is normal, perform a switchover from the active network to the standby network if one of the following situations is met: a BCCH carrier of the active cell is faulty; the BCCH carrier of the active cell is normal, but an OML link of the active device of the active cell is faulty, and a delay protection time for OML link interruption expires; and an A-interface link of the active device is faulty, and the active device is faulty.

With reference to the third aspect or the foregoing possible implementation manners of the third aspect, in a fourth possible implementation manner, the processor of the active device starts a switchover timer, switches a service of the active cell to a neighboring cell of the active cell, sends a switchover request to the standby device, and starts a switchover waiting timer; after the processor of the standby device receives the switchover request, the processor of the standby device enables all the carriers of the standby cell to work, a memory of the standby device records a switchover alarm, and the processor of the standby device sends a switchover response to the active device; after the processor of the active device receives the switchover response, the processor of the active device stops the switchover waiting timer, and a memory of the active device records a switchover alarm.

With reference to the second possible implementation manner of the third aspect, in a fifth possible implementation manner, the processor of the standby device is configured to perform a switchover from the standby network to the active network when the standby network works, a BCCH carrier of the active cell is normal, an OML link of the active device of the active cell is normal, and an A-interface link of the active device is normal.

With reference to any one of the first to the fifth possible implementation manners of the third aspect, in a sixth possible implementation manner, the processor configures the non-BCCH carrier of the standby cell as a subset of non-BCCH carriers of the active cell.

With reference to the third aspect or the foregoing possible implementation manners of the third aspect, in a seventh possible implementation manner, the active device and the standby device are connected by using a same core network, or the active device and the standby device are connected by using different core networks.

According to a fourth aspect, a wireless communications system is provided, including a active base station, a standby base station and any one of the foregoing devices.

In the foregoing technical solutions, a correspondence between an active cell and a standby cell is generated, corresponding carriers are configured, according to whether a current network is an active network or a standby network, to work, and a switchover between the active network and the standby network is performed according to a network availability status, so that mobile network reliability is ensured more adequately at a cell level.

### BRIEF DESCRIPTION OF DRAWINGS

To describe the technical solutions in the embodiments of the present invention more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic networking diagram of a wireless communications system according to an embodiment of the present invention;
FIG. 2 is a schematic flowchart of a method for dual network backup according to an embodiment of the present invention;
FIG. 3 is a schematic flowchart of another method for dual network backup according to an embodiment of the present invention;
FIG. 4 is a schematic block diagram of a device for dual network backup according to an embodiment of the present invention;
FIG. 5 is a schematic block diagram of another device for dual network backup according to an embodiment of the present invention; and
FIG. 6 is a schematic block diagram of another device for dual network backup according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

The technical solutions of the present invention may be applied to communications systems of various RATs, such as a Global System for Mobile Communications (GSM, Global System for Mobile communications), a Code Division Multiple Access (CDMA, Code Division Multiple Access) system, a Wideband Code Division Multiple Access (WCDMA, Wideband Code Division Multiple Access) system, and a general packet radio service (GPRS, General Packet Radio Service) system, where the WCDMA and the GPRS are also referred to as a UMTS (Universal Mobile Telecommunications System, Universal Mobile Telecommunications System).

A user equipment (UE, User Equipment), also referred to as a mobile terminal (Mobile Terminal), a mobile user equipment, and the like, may communicate with one or more core networks (Core Network) through a radio access network (RAN, Radio Access Network). The user equipment may be a mobile terminal, such as a mobile phone (also referred to as a "cellular" phone) and a computer with a mobile terminal. For example, the user equipment may be a portable, pocket-sized, handheld, computer built-in, or in-vehicle mobile apparatus, which exchanges voice and/or data with the radio access network.

A base station may be a base station (BTS, Base Transceiver Station) in the GSM or CDMA, or a base station (NodeB) in the WCDMA; a base station controller may be a base station controller (Base Station Controller, BSC) in the GSM or CDMA, or an RNC (Radio Network Controller) in the WCDMA. The GSM, the UMTS, and the like belong to a radio scope, and the embodiments of the present invention may be used for radio network backup of the GSM, and may also be used for radio network backup of another RAT, which is not limited in the present invention. However, for ease of description, the following embodiments are described by using a BSC, a BTS, and the like in the GSM as examples.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

Existing technologies for improving mobile network reliability mainly include disaster recovery backup. In a technology, when an active base station controller shuts down, a standby base station controller takes over a service of the active base station controller. The technology is at a base station controller level. For another network element, the active base station controller and the standby base station controller are the same, the active base station controller has an IP address the same as that of the base station controller of which a current status is a standby state, and only one base station controller works in a same period of time.

If a base station controller works normally, but a fault, for example, a carrier fault or an RSL (Radio Signaling Link, radio signaling link) fault, occurs in a base station or a cell managed by the base station controller, this still causes service interruption at a cell level of a network. It can be seen that the mobile network reliability cannot be well ensured by using the technology in which backup is performed only at the base station controller level. In addition, because only one base station controller works in the same period of time, the base station controller in the standby state is idle, so that device functions cannot be brought into full play and resources are wasted.

In another technology, dual network backup is performed at a site level. In this case, a switchover between an active network and a standby network refers to a switchover between a base station in the active network and a base station in the standby network. For example, when a base station controller in the active network learns that a base station managed by the base station controller will stop working, the base station controller provides a notification for a base station controller in the standby network, and stops power transmission of the base station in the active network; after receiving the notification, the base station controller in the standby network instructs a base station in the standby network to start to work.

The technology is at a base station level, and a base station in another network is enabled only when a base station completely stops working. For example, an active-standby switchover is performed only when all carriers of the base station are faulty or a master control unit of the base station is faulty, and backup cannot be performed in a timely manner for a cell in which a fault already occurs. Therefore, the technology cannot well ensure that the network works normally. In addition, because only one network works in a same period of time, device functions of a base station in a standby network and the like cannot be brought into full play and resources are wasted.

The embodiments of the present invention provide a method for dual network backup, which can adequately ensure mobile network reliability at a cell level.

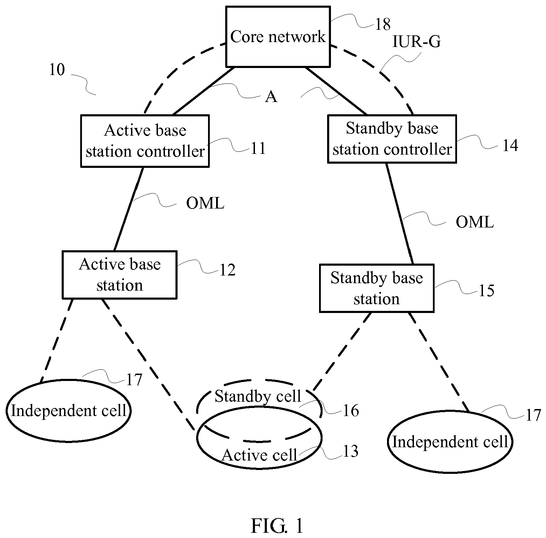

FIG. 1 is a schematic networking diagram of a wireless communications system 10 according to an embodiment of the present invention. A dual network in this embodiment of the present invention refers to active network devices and standby network devices that are included in the wireless communications system 10. The active network devices include an active base station controller 11 and an active base station 12 managed by the active base station controller 11. FIG. 1 further shows an active cell 13 managed by the active base station 12. The standby network devices include a standby base station controller 14 and a standby base station 15 managed by the standby base station controller 14. FIG. 1 further shows a standby cell 16 managed by the standby base station 15. The active base station controller 11 and the standby base station controller 14 are separately connected to a core network 18.

In methods for dual network backup in the embodiments of the present invention, a switchover between an active network and a standby network is performed according to a network availability status. The switchover between the active network and the standby network refers to a switchover between working statuses of an active cell of the active network and a standby cell of the standby network. For example, if a switchover from the active network to the standby network is performed, the standby cell 16 of the standby network mainly undertakes work, but the active cell 13 of the active network does not work; if a switchover from the standby network to the active network is performed, the active cell 13 of the active network mainly undertakes the work, but the standby cell 16 of the standby network assists the work or does not work.

An active-standby cell binding relationship is generated, so that a same area is simultaneously covered by a pair of the active cell 13 and the standby cell 16, where the active cell and the standby cell are in a one-to-one correspondence. Among cells managed by one active base station controller, some cells may be configured as the active cell that has the active-standby cell binding relationship, and the remaining cells may exist as independent cells 17. A situation of the standby base station controller is similar, and cells managed by the standby base station controller may include both the standby cell and independent cells 17.

The active base station controller 11 and the standby base station controller 14 may belong to a same core network or different core networks. For brevity, in this embodiment of the present invention, only the core network 18 is used to show any of the foregoing situations, where a communications protocol between network elements is the same as that in the prior art. In Fig. 1, the active base station controller 11 and the standby base station controller 14 are connected by using the core network 18 and an IUR-G (Interface Between two RNCs, interface between two radio network controllers).

In a same network, an interface between a base station controller and a core network is an A-interface. The base station controller sends information such as a control message, a recorded log, and an alarm to a base station by using an OML (Operation Maintenance Link, operation and maintenance link).

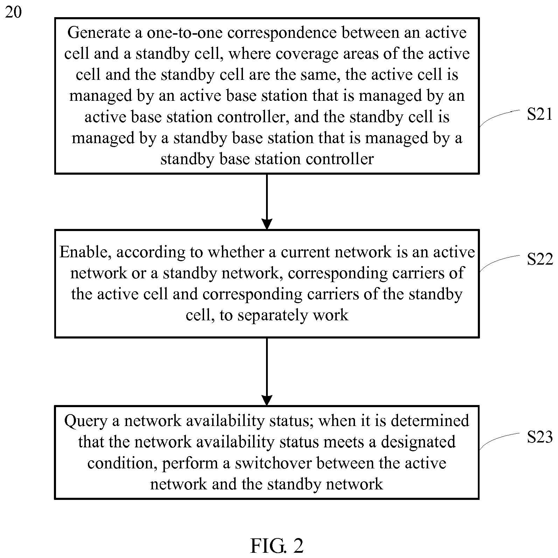

FIG. 2 is a schematic flowchart of a method 20 for dual network backup according to an embodiment of the present invention, including the following content:
S21: Generate a one-to-one correspondence between an active cell and a standby cell, where coverage areas of the active cell and the standby cell are the same, the active cell is managed by an active base station that is managed by an active BSC, and the standby cell is managed by a standby base station that is managed by a standby BSC.
S22: Enable, according to whether a current network is an active network or a standby network, corresponding carriers of the active cell and corresponding carriers of the standby cell to separately work.
S23: Query a network availability status; when it is determined that the network availability status meets a designated condition, perform a switchover between the active network and the standby network.

In this embodiment of the present invention, a correspondence between an active cell and a standby cell is generated, corresponding carriers are configured, according to whether a current network is an active network or a standby network, to work, and a switchover between the active network and the standby network is performed according to a network availability status, so that mobile network reliability is ensured more adequately at a cell level.

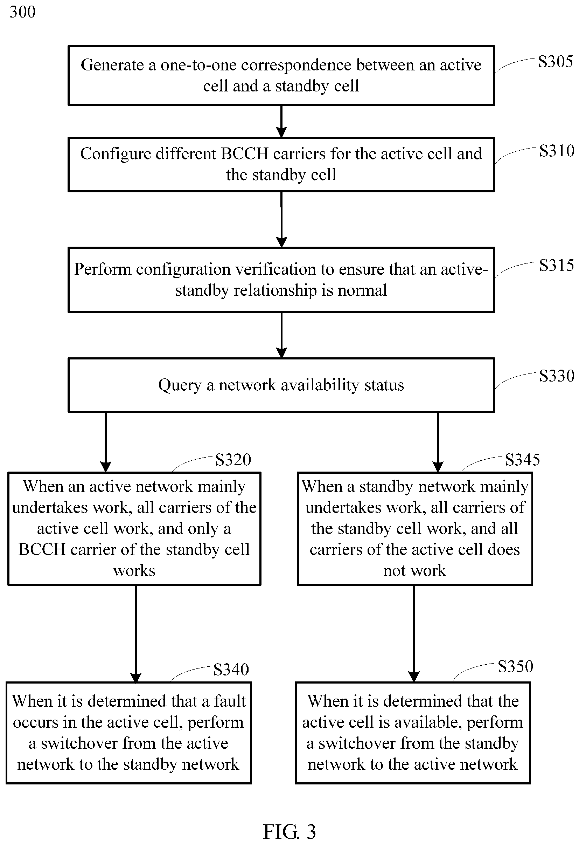

FIG. 3 is a schematic flowchart of another method 300 for dual network backup according to an embodiment of the present invention, including the following content:
S305: Generate a one-to-one correspondence between an active cell and a standby cell.

As shown in FIG. 1, a same area is simultaneously covered by two cells, namely, the active cell and the standby cell. Optionally, in addition to the active cell, cells of an active base station may further include some independent cells; in addition to the standby cell, cells of a standby base station may further include some independent cells. The independent cells are cells except the active cell and the standby cell.

S310: Configure different BCCH carriers for the active cell and the standby cell.

A carrier for carrying a BCCH (Broadcast Channel, broadcast channel) of a cell is referred to as a BCCH carrier, and a frequency channel number of the BCCH carrier is referred to as a BCCH frequency channel number. A carrier, except a BCCH carrier, among all carriers of one cell is referred to as a non-BCCH carrier.

In the method for dual network backup in this embodiment of the present invention, a share non BCCH (SNB, Share Non BCCH) frequency function is used; when all carriers of one active cell of an active network are faulty, a standby carrier of a corresponding standby cell of a standby network takes over work of a non-BCCH carrier of the active cell, to recover some service capacities. In addition, when the active network works, a BCCH carrier of the standby cell of the standby network works, and may carry some services. In a technology using the SNB function, because the active cell of the active network and the standby cell of the standby network are in a one-to-one correspondence, and use different BCCH carriers, the active cell of the active network and the standby cell of the standby network can simultaneously work. Thus, mutual interference is prevented and a waste of frequency channel numbers is also prevented.

In addition, frequency resources may be saved by configuring a non-BCCH carrier of the standby cell as a subset of non-BCCH carriers of the active cell.

S315: Perform configuration verification to ensure that an active-standby relationship is normal.

After the active-standby cell relationship is generated and frequencies of the cells are configured, the configuration verification is performed first, to ensure that a relationship between the active network and the standby network is normal. Preferably, periodical verification may be performed. The active cell and the standby cell are checked; if a configuration error is found, a user may be prompted by using an alarm. For example, base station controllers check, by a periodical handshake, that is, sending a verification message to each other, whether a configuration of the active-standby relationship is correct and whether working statuses of the current active and standby networks are normal. The verification message includes an identifier of a cell at a receive end, an identifier of a cell at a transmit end, an active/standby type (an active cell or a standby cell) configured by the cell at the transmit end, a running status (active or standby) of the cell at the transmit end, and the like. The receive end checks, according to the identifier of the cell at the transmit end, whether a local end has a cell that is configured in an active-standby relationship with the cell at the transmit end, and may also determine, according to comparison between the active/standby type configured for the cell at the transmit end and an active/standby type of a cell at the local end, whether the cells are configured as both active cells or are configured as both standby cells. These all belong to a scope of the configuration verification. In addition, it may be further determined, according to the running status of the cell at the transmit end, whether the current networks are both in an active state or a standby state. If an error is found in the configuration by means of the verification, a configuration error alarm is reported to prompt the user. If the running status is incorrect, it is determined, according to a decision principle, that a cell at one end is specified to be active, and that a cell at the other end is specified to be standby, so as to ensure a working relationship of one being active and one being standby in the network. The foregoing configuration verification may be performed on schedule after the active network and the standby network are determined.

Next, the method for dual network backup when a switchover from the active network to the standby network is performed is described first.

S320: When the active network mainly undertakes work, all carriers of the active cell work, and only a BCCH carrier of the standby cell works.

This is a working status of each cell when the active network mainly undertakes the work. In the prior art, network radio parameter planning may be performed to enable a user equipment to preferentially camp on the active cell, and to preferentially use a channel of the active cell when a service is initiated.

S330: Query a network availability status.

The network availability status may be queried by means of communication between the base station controllers. Preferably, a periodical query may be performed. Fault and recovery situations of a cell are learned according to the network availability status, so as to execute a switchover between the active network and the standby network. Several examples are listed herein, and this embodiment of the present invention includes, but is limited to, the following situations. In this embodiment of the present invention, the switchover between the active network and the standby network refers to a switchover between working statuses of the active cell of the active network and the standby cell of the standby network.

Availability statuses of all active cells and standby cells may be learned by querying the network availability status. When a BCCH carrier of a cell works normally, an A-interface is normal, and an OML is normal, it is determined that the cell is in an available state, and otherwise, it is determined that a fault occurs in the cell.
(a) If a BCCH carrier of any cell is faulty, it is considered that a fault occurs in the cell.
   When the active network works, a BCCH carrier of the active cell is faulty, and the BCCH carrier of the standby cell is normal, a switchover from the active network to the standby network is performed.
(b) If a BCCH carrier of a cell is normal, but an OML link of a base station controller in which the cell is located is faulty, and a delay protection time for OML link interruption already expires, it is considered that a fault occurs in the cell.
   When the active network works, the BCCH carrier of the active cell is normal, but an OML link of the active base station in which the active cell is located is faulty, and a delay protection time for OML link interruption already expires, it is considered that a fault occurs in the active cell, and a switchover from the active network to the standby network is performed.
(c) If an A-interface link is faulty, it is considered that faults occur in all cells of the base station controller.
   When the active network works, if an A-interface link connecting an active base station controller and a core network is faulty, an IUR-G between the active base station controller and a standby base station controller is faulty, and communication between the active base station controller and the standby base station controller cannot be performed. Therefore, faults occur in all active cells managed by the active base station controller, and a switchover from the active network to the standby network is performed.
(d) If a base station controller is faulty, it is considered that faults occur in all cells of the base station controller.

When the active network works, if the active base station controller is faulty, the IUR-G between the active base station controller and the standby base station controller is faulty and the communication between the active base station controller and the standby base station controller cannot be performed. Therefore, faults occur in all the active cells managed by the active base station controller, and a switchover from the active network to the standby network is performed.

When a situation of the active network meets one of the foregoing conditions (a) to (d), the standby network may be enabled to take over the work of the active network. Therefore, a reliability granularity may be refined to a cell, so as to farthest ensure that network coverage is not interrupted.

Compared with an existing backup technology at a base station level, in the prior art, a base station controller needs to interact with a base station by using an OML; when an active network is switched to a standby network, a standby base station needs to be deactivated or a carrier shutdown message needs to be delivered, and the standby base station is relied on to control a carrier module to enable a power amplifier. However, this embodiment of the present invention relies on neither the OML nor an action of the base station. Because BCCH frequencies are inconsistent, interference may not be generated when the BCCH frequencies simultaneously enable power amplifiers or send broadcast messages, and an active-standby state switchover can be implemented only by controlling carrier service access on the base station controller side. An implementation manner in this embodiment of the present invention requires operations only on the base station controller, which is more convenient.

S340: When it is determined that a fault occurs in the active cell, perform a switchover from the active network to the standby network.

When detecting that a fault occurs in the active cell, the active base station controller starts a switchover timer, switches a service of the active cell to another cell, then sends a switchover request to the standby cell, and starts a switchover waiting timer. The base station controller switches traffic, which is of the active cell in which the fault occurs, to a neighboring cell in a timing range of the switchover timer, where the neighboring cell may be an internal neighboring cell or an external neighboring cell, so as to farthest ensure that a call is not affected. The traffic switching refers to transferring of the traffic, and is different from the active-standby network switchover. After the traffic switching is completed, the active base station controller may instruct a cell at a peer end to be changed to be active, and at the same time, starts the switchover waiting timer. After being changed to be active, the cell at the peer end may return a response message to a local end. After receiving a switchover response, the active cell stops the switchover waiting timer, and reports a switchover alarm to indicate that the switchover is successful. One handshake is completed, and all carriers of the active cell are configured to skip working. If this handshake is not completed when the switchover timer expires, it is considered that the active-standby network switchover fails, and a reported switchover event alarm indicates that the switchover expires. The switchover waiting timer is mainly used to ensure that the active-standby network switchover is completed within a period of time, and a switchover result is displayed in a switchover event alarm.

After the standby cell of the standby base station controller receives the switchover request and determines that the standby cell is in an available state, the standby cell activates all carriers and sets the carriers to be in a working state, reports a switchover alarm, and returns a switchover response to the active cell. When the BCCH carrier of the standby cell is normal, an OML link of a base station in which the standby cell is located is normal, an A-interface link of the standby base station controller is normal, and the standby base station controller is normal, the standby cell is in the available state.

However, for a situation in which the active base station controller is faulty, and a handshake message between the active base station controller and the standby base station controller is lost, the standby cell directly sets all the carriers to be in the working state, and it is considered that the active cell does not work any more. In this way, when a fault occurs in the active cell, because the standby cell with a same coverage area is enabled, the service is farthest prevented from being interrupted. Further, when a fault occurs in an independent cell, because there is no dual network backup function, a service in a coverage area of the independent cell is interrupted. Compared with a method for dual network backup at a base station controller level or at a site level in the prior art, this embodiment of the present invention may achieve network reliability at a cell level, so as to farthest ensure that the service is not affected.

Next, the method for dual network backup when a switchover from the standby network to the active network is performed is further described.

S345: When the standby network mainly undertakes work, all carriers of the standby cell work, and all carriers of the active cell do not work.

This is a working status of each cell when the standby network mainly undertakes the work.

S330: Query a network availability status.

The step is the same as the foregoing step S330. Availability statuses of all cells, such as active cells, standby cells, or independent cells, may be learned by querying the network availability status. When a BCCH carrier of a cell works normally, an A-interface is normal, and an OML is normal, it is determined that the cell is in an available state, and otherwise, it is determined that a fault occurs in the cell.

S350: When it is determined that the active cell is available, perform a switchover from the standby network to the active network.

When it is learned, by means of a query, that the active cell is recovered from a faulty state to an available state, a switchover from the standby network to the active network is performed by means of a handshake between the active base station controller and the standby base station controller. A process is reverse to that of S340, and content is similar. After the switchover from the standby network to the active network is performed, all the carriers of the active cell work, and only the BCCH carrier of the standby cell works.

In this embodiment of the present invention, a correspondence between an active cell and a standby cell is generated, different BCCH carriers are configured for the active cell and the standby cell, corresponding carriers of the active cell and the standby cell are configured, according to whether a current network is an active network or a standby network, to work, and a switchover between the active network and the standby network is performed according to a network availability status, so that mobile network reliability is ensured at a cell level, and a BCCH carrier of the standby cell works when the active network works, thereby giving full play to functions of resources of a standby device.

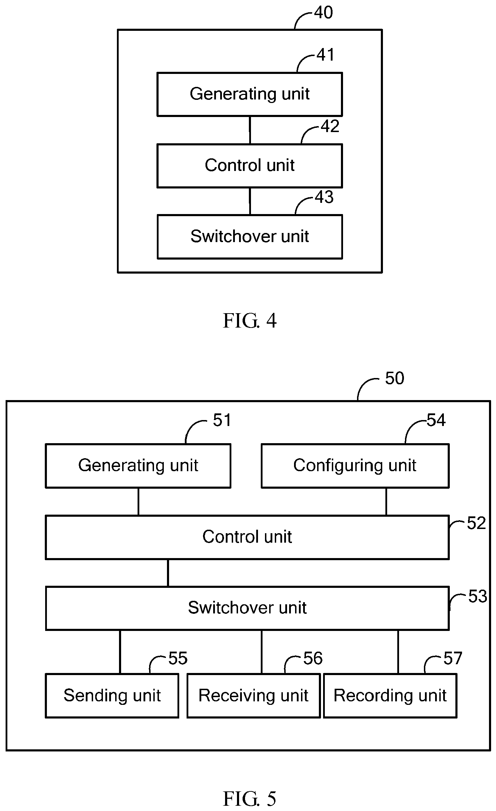

FIG. 4 is a schematic block diagram of a device 40 for dual network backup according to an embodiment of the present invention. The device 40 includes a generating unit 41, a control unit 42, and a switchover unit 43.

The generating unit 41 generates a one-to-one correspondence between an active cell and a standby cell, where coverage areas of the active cell and the standby cell are the same, the active cell is managed by an active base station that is managed by an active device, and the standby cell is managed by a standby base station that is managed by a standby device.

The control unit 42 enables, according to whether a current network is an active network or a standby network, corresponding carriers of the active cell and corresponding carriers of the standby cell to separately work.

The switchover unit 43 queries a network availability status, and when it is determined that the network availability status meets a designated condition, performs a switchover between the active network and the standby network.

In this embodiment of the present invention, a correspondence between an active cell and a standby cell is generated, corresponding carriers are configured, according to whether a current network is an active network or a standby network, to work, and a switchover between the active network and the standby network is performed according to a network availability status, so that mobile network reliability is ensured more adequately at a cell level.

FIG. 5 is a schematic block diagram of another device 50 for dual network backup according to an embodiment of the present invention. The device 50 includes a generating unit 51, a control unit 52, a switchover unit 53, a configuring unit 54, a sending unit 55, a receiving unit 56, and a recording unit 57. The generating unit 51, the control unit 52, and the switchover unit 53 of the device 50 are the same as or similar to the generating unit 41, the control unit 42, and the switchover unit 43 of the device 40, and a difference is that the device 50 further includes the configuring unit 54, the sending unit 55, the receiving unit 56, and the recording unit 57.

The generating unit 51 generates a one-to-one correspondence between an active cell and a standby cell, where coverage areas of the active cell and the standby cell are the same, the active cell is managed by an active base station that is managed by an active device, and the standby cell is managed by a standby base station that is managed by a standby device.

The control unit 52 enables, according to whether a current network is an active network or a standby network, corresponding carriers of the active cell and corresponding carriers of the standby cell to separately work.

The switchover unit 53 queries a network availability status, and when it is determined that the network availability status meets a designated condition, performs a switchover between the active network and the standby network.

Optionally, as a different embodiment, the configuring unit 54 configures different BCCH carriers for the active cell and the standby cell, where the BCCH carriers are carriers, which are used to send a broadcast channel, among cell carriers, and a carrier, except a BCCH carrier, among all carriers of one cell is a non-BCCH carrier.

Optionally, as a different embodiment, when the current network is the active network, a control unit 52 of the active device enables all carriers of the active cell to work, and a control unit 52 of the standby device enables a BCCH carrier of the standby cell to work and a non-BCCH carrier to skip working; or when the current network is the standby network, a control unit 52 of the standby device enables all carriers of the standby cell to work, and a control unit of the active device enables all carriers of the active cell to skip working. Because different BCCH carriers are configured, the BCCH carriers of the active cell and the standby cell may simultaneously work on the active network, and the standby cell may carry some services of the active network.

Optionally, as a different embodiment, when the BCCH carrier of the standby cell is normal, an operation and maintenance link OML link of the standby device of the standby cell is normal, an A-interface link of the standby device is normal, and the standby device is normal, the switchover unit 53 specifically performs a switchover from the active network to the standby network if one of the following situations is met: a BCCH carrier of the active cell is faulty; the BCCH carrier of the active cell is normal, but an OML link of the active device of the active cell is faulty, and a delay protection time for OML link interruption expires; and an A-interface link of the active device is faulty, and the active device is faulty. When one of the foregoing situations occurs, it is determined that a fault occurs in the active cell of the active network, so that an active-standby network switchover is started.

Optionally, as a different embodiment, a switchover unit 53 of the active device starts a switchover timer, and switches a service of the active cell to a neighboring cell of the active cell, a sending unit 55 of the active device sends a switchover request to the standby device, and the switchover unit 53 of the active device starts a switchover waiting timer; after a receiving unit of the standby device receives the switchover request, the control unit of the standby device enables all the carriers of the standby cell to work, a recording unit of the standby device records a switchover alarm, and a sending unit of the standby device sends a switchover response to the active device; after a receiving unit 56 of the active device receives the switchover response, the switchover unit 53 of the active device stops the switchover waiting timer, and a recording unit 57 of the active device records a switchover alarm. The switchover from the active network to the standby network is implemented by means of the foregoing switchover process. A switchover from the standby network to the active network is an inverse process of the foregoing switchover process.

Optionally, as a different embodiment, a switchover unit 53 of the standby device performs a switchover from the standby network to the active network when the standby network works, a BCCH carrier of the active cell is normal, an OML link of the active device of the active cell is normal, and an A-interface link of the active device is normal.

Optionally, as a different embodiment, the configuring unit 54 configures the non-BCCH carrier of the standby cell as a subset of non-BCCH carriers of the active cell. Therefore, frequency resources may be saved.

Optionally, as a different embodiment, the active device and the standby device are connected by using a same core network, or the active device and the standby device are connected by using different core networks. The active device and the standby device are connected by using the core network and various existing communications interfaces.

In this embodiment of the present invention, a correspondence between an active cell and a standby cell is generated, different BCCH carriers are configured for the active cell and the standby cell, corresponding carriers of the active cell and the standby cell are configured, according to whether a current network is an active network or a standby network, to work, and a switchover between the active network and the standby network is performed according to a network availability status, so that mobile network reliability is ensured at a cell level, and a BCCH carrier of the standby cell works when the active network works, thereby giving full play to functions of resources of a standby device.

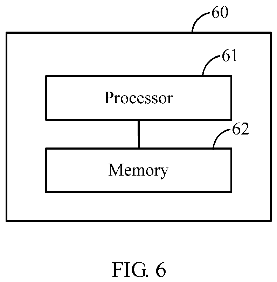

FIG. 6 is a schematic block diagram of another device 60 for dual network backup according to an embodiment of the present invention. The device 60 includes a processor 61 and a memory 62.

The methods disclosed in the foregoing embodiments of the present invention may be applied to the processor 61, or be implemented by a processor 61. The processor 61 may be a type of integrated circuit chip and has a signal processing capability. In an implementation process, the steps of the foregoing methods may be accomplished by an integrated logic circuit of hardware in the processor 61 or by instructions in a software form. The foregoing processor 61 may be a general purpose processor, a digital signal processor (DSP), an application-specific integrated circuit (ASIC), a field programmable gate array (FPGA), or another programmable logical device, discrete gate or transistor logical device, or discrete hardware component, and may implement or execute the methods, steps, and logical block diagrams that are disclosed in the embodiments of the present invention. The general purpose processor may be a microprocessor or the processor may also be any conventional processor or the like. The steps of the methods disclosed with reference to the embodiments of the present invention may be directly executed and accomplished by means of a hardware decoding processor, or may be executed and accomplished by using a combination of hardware and software modules in the decoding processor. The software module may be located in a mature storage medium in the field, such as a random access memory, a flash memory, a read-only memory, a programmable read-only memory, an electrically-erasable programmable memory, or a register. The storage medium is located in the memory 62, and the processor 61 reads information in the memory 62 and accomplishes the steps in the foregoing methods in combination with the hardware of the processor 61.

The processor 61 generates a one-to-one correspondence between an active cell and a standby cell, where coverage areas of the active cell and the standby cell are the same, the active cell is managed by an active base station that is managed by an active device, and the standby cell is managed by a standby base station that is managed by a standby device; enables, according to whether a current network is an active network or a standby network, corresponding carriers of the active cell and corresponding carriers of the standby cell to separately work; and queries a network availability status, and when it is determined that the network availability status meets a designated condition, performs a switchover between the active network and the standby network.

Optionally, as a different embodiment, the processor 61 configures different BCCH carriers for the active cell and the standby cell, where the BCCH carriers are carriers, which are used to send a broadcast channel, among cell carriers, and a carrier, except a BCCH carrier, among all carriers of one cell is a non-BCCH carrier.

Optionally, as a different embodiment, when the current network is the active network, a processor 61 of the active device enables all carriers of the active cell to work, and the standby base station controller enables a BCCH carrier of the standby cell to work and a non-BCCH carrier to skip working; or when the current network is the standby network, a processor 61 of the standby device enables all carriers of the standby cell to work, and a processor 61 of the active device enables all carriers of the active cell to skip working. Because different BCCH carriers are configured, the BCCH carriers of the active cell and the standby cell may simultaneously work on the active network, and the standby cell may carry some services of the active network.

Optionally, as a different embodiment, when the BCCH carrier of the standby cell is normal, an operation and maintenance link OML link of the standby device of the standby cell is normal, an A-interface link of the standby device is normal, and the standby device is normal, the processor 61 specifically performs a switchover from the active network to the standby network if one of the following situations is met: a BCCH carrier of the active cell is faulty; the BCCH carrier of the active cell is normal, but an OML link of the active device of the active cell is faulty, and a delay protection time for OML link interruption expires; and an A-interface link of the active device is faulty, and the active device is faulty. When one of the foregoing situations occurs, it is determined that a fault occurs in the active cell of the active network, so that an active-standby network switchover is started.

Optionally, as a different embodiment, the processor 61 of the active device starts a switchover timer, and switches a service of the active cell to a neighboring cell of the active cell; the processor 61 of the active device sends a switchover request to the standby device, and starts a switchover waiting timer; after the processor 61 of the standby device receives the switchover request, the processor 61 of the standby device enables all the carriers of the standby cell to work, a memory 62 of the standby device records a switchover alarm, and the processor 61 of the standby device sends a switchover response to the active device; after the processor 61 of the active device receives the switchover response, the processor 61 of the active device stops the switchover waiting timer, and a memory 62 of the active device records a switchover alarm. The switchover from the active network to the standby network is implemented by means of the foregoing switchover process. A switchover from the standby network to the active network is an inverse process of the foregoing switchover process.

Optionally, as a different embodiment, the processor 61 of the standby device performs a switchover from the standby network to the active network when the standby network works, a BCCH carrier of the active cell is normal, an OML link of the active device of the active cell is normal, and an A-interface link of the active device is normal.

Optionally, as a different embodiment, the processor 61 configures the non-BCCH carrier of the standby cell as a subset of non-BCCH carriers of the active cell. Therefore, frequency resources may be saved.

Optionally, as a different embodiment, the active device and the standby device are connected by using a same core network, or the active device and the standby device are connected by using different core networks. The active device and the standby device are connected by using the core network and various existing communications interfaces.

In this embodiment of the present invention, a correspondence between an active cell and a standby cell is generated by using a processor, different BCCH carriers are configured for the active cell and the standby cell, corresponding carriers of the active cell and the standby cell are configured, according to whether a current network is an active network or a standby network, to work, and a switchover between the active network and the standby network is performed according to a network availability status, so that mobile network reliability is ensured at a cell level, and a BCCH carrier of the standby cell works when the active network works, thereby giving full play to functions of resources of a standby device.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention, that is defined by the appended claims.

## Claims

1. A method for dual network backup, comprising:
generating (21), by a device (40) for dual network backup, a one-to-one correspondence between an active cell (13) and a standby cell (16), wherein the coverage areas of the active cell and the standby cell are the same, the active cell is managed by an active base station (12) that is managed by an active base station controller (11), and the standby cell is managed by a standby base station (15) that is managed by a standby base station controller (14);
enabling (22), by the device (40) for dual network backup, according to whether a current network is an active network or a standby network, corresponding carriers of the active cell and corresponding carriers of the standby cell to separately work;
querying (23), by the device (40) for dual network backup, a network availability status, and
performing (23), by the device (40) for dual network backup, when it is determined that the network availability status meets a designated condition, a switchover between the active network and the standby network,
wherein said switchover refers to a switchover between working statuses of the active cell of the active network and the standby cell of the standby network.

2. The method according to claim 1, wherein the method further comprises:
Configuring, by the device (40) for dual network backup, different broadcast control channel, BCCH, carriers for the active cell and the standby cell, wherein the BCCH carriers are carriers, which are used to send a broadcast channel, among cell carriers, and a carrier, except a BCCH carrier, among all carriers of one cell is a non-BCCH carrier.

3. The method according to claim 2, wherein the enabling (22), according to whether the current network is the active network or the standby network, corresponding carriers of the active cell and corresponding carriers of the standby cell to separately work comprises:
when the current network is the active network, enabling, by the active base station controller, all carriers of the active cell to work, and enabling, by the standby base station controller, a BCCH carrier of the standby cell to work and a non-BCCH carrier to skip working; or
when the current network is the standby network, enabling, by the standby base station controller, all carriers of the standby cell to work, and enabling, by the active base station controller, all carriers of the active cell to skip working.

4. The method according to claim 3, wherein the performing (23), when it is determined that the network availability status meets the designated condition, the switchover between the active network and the standby network comprises:
when the BCCH carrier of the standby cell is normal, an operation and maintenance link OML link of the standby base station controller of the standby cell is normal, an A-interface link of the standby base station controller is normal, and the standby base station controller is normal, performing a switchover from the active network to the standby network if one of the following situations is met: a BCCH carrier of the active cell is faulty; the BCCH carrier of the active cell is normal, but an OML link of the active base station controller of the active cell is faulty, and a delay protection time for OML link interruption expires; and an A-interface link of the active base station controller is faulty, and the active base station controller is faulty.

5. The method according to claim 4, wherein the performing (23) the switchover from the active network to the standby network comprises:
starting, by the active base station controller, a switchover timer, switching a service of the active cell to a neighboring cell of the active cell, sending a switchover request to the standby base station controller, and starting a switchover waiting timer;
after receiving the switchover request, enabling, by the standby base station controller, all the carriers of the standby cell to work, recording a switchover alarm, and sending a switchover response to the active base station controller; and
after receiving the switchover response, stopping, by the active base station controller, the switchover waiting timer, and recording a switchover alarm.

6. The method according to claim 3, wherein the performing (23), when it is determined that the network availability status meets the designated condition, the switchover between the active network and the standby network comprises:
performing the switchover from the standby network to the active network when the standby network works, a BCCH carrier of the active cell is normal, an OML link of the active base station controller of the active cell is normal, and an A-interface link of the active base station controller is normal.

7. The method according to any one of claims 2 to 6, wherein the method further comprises: configuring the non-BCCH carrier of the standby cell as a subset of non-BCCH carriers of the active cell.

8. The method according to any one of claims 1 to 7, wherein:
the active base station controller and the standby base station controller are connected by using a same core network, or the active base station controller and the standby base station controller are connected by using different core networks.

9. A device (40) for dual network backup, comprising a generating unit (41), a control unit (42), and a switchover unit (43), wherein
the generating unit (41) is configured to generate a one-to-one correspondence between an active cell (13) and a standby cell (16), wherein the coverage areas of the active cell and the standby cell are the same, the active cell is managed by an active base station (12) that is managed by an active base station controller (11), and the standby cell is managed by a standby base station (15) that is managed by a standby base station controller (14); the control unit (42) is configured to enable, according to whether a current network is an active network or a standby network, corresponding carriers of the active cell and corresponding carriers of the standby cell to separately work; and
the switchover unit (43) is configured to: query a network availability status; and when it is determined that the network availability status meets a designated condition, perform a switchover between the active network and the standby network,
wherein said switchover refers to a switchover between working statuses of the active cell of the active network and the standby cell of the standby network.

10. The device according to claim 9, wherein the device further comprises a configuring unit, wherein
the configuring unit (54) is configured to configure different broadcast control channel, BCCH, carriers for the active cell and the standby cell, wherein the BCCH carriers are carriers, which are used to send a broadcast channel, among cell carriers, and a carrier, except a BCCH carrier, among all carriers of one cell is a non-BCCH carrier.

11. The device according to claim 10, wherein:
the switchover unit (43) is specifically configured to: when the BCCH carrier of the standby cell is normal, an operation and maintenance link, OML, link of the standby device of the standby cell is normal, an A-interface link of the standby device is normal, and the standby device is normal, perform a switchover from the active network to the standby network if one of the following situations is met: a BCCH carrier of the active cell is faulty; the BCCH carrier of the active cell is normal, but an OML link of the active device of the active cell is faulty, and a delay protection time for OML link interruption expires; and an A-interface link of the active device is faulty, and the active device is faulty.

12. The device according to any one of claims 10 to 11, wherein the configuring unit (54) configures the non-BCCH carrier of the standby cell as a subset of non-BCCH carriers of the active cell.

13. The device according to any one of claims 9 to 12, wherein:
the active device and the standby device are connected by using a same core network, or the active device and the standby device are connected by using different core networks.

14. A wireless communications system, comprising an active base station (12), configured to manage an active cell (13), a standby base station (15) configured to manage a standby cell (16), and the device for dual network backup according to any one of claims 9 to 13, wherein the coverage areas of the active cell and the standby cell are the same, the active base station is managed by an active base station controller (11), and the standby base station is managed by a standby base station controller (14).

## Patentansprüche

1. Verfahren für eine duale Netzwerksicherung, umfassend:
Erzeugen (21), durch eine Vorrichtung (40) für duale Netzwerksicherung, einer Eins-zu-Eins-Entsprechung zwischen einer aktiven Zelle (13) und einer Bereitschaftszelle (16), wobei die Abdeckungsbereiche der aktiven Zelle und der Bereitschaftszelle dieselben sind, die aktive Zelle durch eine aktive Basisstation (12) verwaltet wird, die durch eine aktive Basisstationssteuerung (11) verwaltet wird, und die Bereitschaftszelle durch eine Bereitschaftsbasisstation (15) verwaltet wird, die durch eine Bereitschaftsbasisstationssteuerung (14) verwaltet wird;
Ermöglichen (22), durch die Vorrichtung (40) für duale Netzwerksicherung, gemäß dessen, ob ein aktuelles Netzwerk ein aktives Netzwerk oder ein Bereitschaftsnetzwerk ist, dass entsprechende Träger der aktiven Zelle und entsprechende Träger der Bereitschaftszelle separat funktionieren;
Abfragen (23), durch die Vorrichtung (40) für duale Netzwerksicherung, eines Netzwerkverfügbarkeitsstatus, und
Durchführen (23), durch die Vorrichtung (40) für duale Netzwerksicherung, wenn bestimmt wird, dass der Netzwerkverfügbarkeitsstatus eine zugewiesene Bedingung erfüllt, eines Umschaltens zwischen dem aktiven Netzwerk und dem Bereitschaftsnetzwerk,
wobei das Umschalten ein Umschalten zwischen Funktionsstatus der aktiven Zelle des aktiven Netzwerks und der Bereitschaftszelle des Bereitschaftsnetzwerks betrifft.

2. Verfahren nach Anspruch 1, wobei das Verfahren ferner umfasst:
Konfigurieren, durch die Vorrichtung (40) für duale Netzwerksicherung, verschiedener Rundsendesteuerkanal(BCCH, Broadcast Control Channel)-Träger für die aktive Zelle und die Bereitschaftszelle, wobei die BCCH-Träger Träger, die verwendet werden, um einen Rundsendekanal zu senden, unter Zellträgern sind, und ein Träger, außer einem BCCH-Träger, unter allen Trägern einer Zelle ein Nicht-BCCH-Träger ist.

3. Verfahren nach Anspruch 2, wobei das Ermöglichen (22), gemäß dessen, ob das aktuelle Netzwerk ein aktives Netzwerk oder ein Bereitschaftsnetzwerk ist, dass entsprechende Träger der aktiven Zelle und entsprechende Träger der Bereitschaftszelle separat funktionieren, umfasst:
wenn das aktuelle Netzwerk das aktive Netzwerk ist, Ermöglichen, durch die aktive Basisstationssteuerung, dass alle Träger der aktiven Zelle funktionieren, und Ermöglichen, durch die Bereitschaftsbasisstationssteuerung, dass ein BCCH-Träger der Bereitschaftszelle funktioniert und ein Nicht-BCCH-Träger aussetzt zu funktionieren; oder
wenn das aktuelle Netzwerk das Bereitschaftsnetzwerk ist, Ermöglichen, durch die Bereitschaftsbasisstationssteuerung, dass alle Träger der Bereitschaftszelle funktionieren, und Ermöglichen, durch die aktive Basisstationssteuerung, dass alle Träger der aktiven Zelle aussetzen zu funktionieren.

4. Verfahren nach Anspruch 3, wobei das Durchführen (23), wenn bestimmt wird, dass der Netzwerkverfügbarkeitsstatus die zugewiesene Bedingung erfüllt, des Umschaltens zwischen dem aktiven Netzwerk und dem Bereitschaftsnetzwerk umfasst:
wenn der BCCH-Träger der Bereitschaftszelle normal ist, eine Betriebs- und Wartungsverbindungs(OML, Operation and Maintenance Link)-Verbindung der Bereitschaftsbasisstationssteuerung der Bereitschaftszelle normal ist, eine A-Schnittstellenverbindung der Bereitschaftsbasisstationssteuerung normal ist und die Bereitschaftsbasisstationssteuerung normal ist, Durchführen eines Umschaltens von dem aktiven Netzwerk zu dem Bereitschaftsnetzwerk, wenn eine der folgenden Situationen zutrifft: ein BCCH-Träger der aktiven Zelle ist fehlerhaft; der BCCH-Träger der aktiven Zelle ist normal, aber eine OML-Verbindung der aktiven Basisstationssteuerung der aktiven Zelle ist fehlerhaft, und eine Verzögerungsschutzzeit für eine OML-Verbindungsunterbrechung läuft ab; und eine A-Schnittstellenverbindung der aktiven Basisstationssteuerung ist fehlerhaft, und die aktive Basisstationssteuerung ist fehlerhaft.

5. Verfahren nach Anspruch 4, wobei das Durchführen (23) des Umschaltens von dem aktiven Netzwerk zu dem Bereitschaftsnetzwerk umfasst:
Starten, durch die aktive Basisstationssteuerung, eines Umschaltzeitgebers, Umschalten eines Dienstes der aktiven Zelle zu einer benachbarten Zelle der aktiven Zelle, Senden einer Umschaltanfrage an die Bereitschaftsbasisstationssteuerung, und Starten eines Umschaltwartezeitgebers;
nach Empfangen der Umschaltanfrage, Ermöglichen, durch die Bereitschaftsbasisstationssteuerung, dass alle Träger der Bereitschaftszelle funktionieren, Aufzeichnen eines Umschaltalarms, und Senden einer Umschaltantwort an die aktive Basisstationssteuerung; und
nach Empfangen der Umschaltantwort, Stoppen, durch die aktive Basisstationssteuerung, des Umschaltwartezeitgebers, und Aufzeichnen eines Umschaltalarms.

6. Verfahren nach Anspruch 3, wobei das Durchführen (23), wenn bestimmt wird, dass der Netzwerkverfügbarkeitsstatus eine zugewiesene Bedingung erfüllt, des Umschaltens zwischen dem aktiven Netzwerk und dem Bereitschaftsnetzwerk umfasst:
Durchführen des Umschaltens von dem Bereitschaftsnetzwerk zu dem aktiven Netzwerk, wenn das Bereitschaftsnetzwerk funktioniert, ein BCCH-Träger der aktiven Zelle normal ist, eine OML-Verbindung der aktiven Basisstationssteuerung der aktiven Zelle normal ist, und eine A-Schnittstellenverbindung der aktiven Basisstationssteuerung normal ist.

7. Verfahren nach einem der Ansprüche 2 bis 6, wobei das Verfahren ferner umfasst:
Konfigurieren des Nicht-BCCH-Trägers der Bereitschaftszelle als einen Teilsatz von Nicht-BCCH-Trägern der aktiven Zelle.

8. Verfahren nach einem der Ansprüche 1 bis 7, wobei:
die aktive Basisstationssteuerung und die Bereitschaftsbasisstationssteuerung unter Verwenden eines gleichen Kernnetzwerks verbunden sind, oder die aktive Basisstationssteuerung und die Bereitschaftsbasisstationssteuerung unter Verwenden unterschiedlicher Kernnetzwerke verbunden sind.

9. Vorrichtung (40) für eine duale Netzwerksicherung, umfassend eine Erzeugungseinheit (41), eine Steuereinheit (42) und eine Umschalteinheit (43), wobei die Erzeugungseinheit (41) konfiguriert ist, eine Eins-zu-Eins-Entsprechung zwischen einer aktiven Zelle (13) und einer Bereitschaftszelle (16) zu erzeugen, wobei die Abdeckungsbereiche der aktiven Zelle und der Bereitschaftszelle dieselben sind, die aktive Zelle durch eine aktive Basisstation (12) verwaltet wird, die durch eine aktive Basisstationssteuerung (11) verwaltet wird, und die Bereitschaftszelle durch eine Bereitschaftsbasisstation (15) verwaltet wird, die durch eine Bereitschaftsbasisstationssteuerung (14) verwaltet wird;
die Steuereinheit (42) konfiguriert ist, gemäß dessen, ob ein aktuelles Netzwerk ein aktives Netzwerk oder ein Bereitschaftsnetzwerk ist, zu ermöglichen, dass entsprechende Träger der aktiven Zelle und entsprechende Träger der Bereitschaftszelle separat funktionieren; und
die Umschalteinheit (43) zu Folgendem konfiguriert ist: Abfragen eines Netzwerkverfügbarkeitsstatus; und wenn bestimmt wird, dass der Netzwerkverfügbarkeitsstatus eine zugewiesene Bedingung erfüllt, Durchführen eines Umschaltens zwischen dem aktiven Netzwerk und dem Bereitschaftsnetzwerk, wobei das Umschalten ein Umschalten zwischen Funktionsstatus der aktiven Zelle des aktiven Netzwerks und der Bereitschaftszelle des Bereitschaftsnetzwerks betrifft.

10. Vorrichtung nach Anspruch 9, wobei die Vorrichtung ferner eine Konfigurationseinheit umfasst, wobei
die Konfigurationseinheit (54) konfiguriert ist, verschiedene Rundsendesteuerkanal(BCCH, Broadcast Control Channel)-Träger für die aktive Zelle und die Bereitschaftszelle zu konfigurieren, wobei die BCCH-Träger Träger, die verwendet werden, um einen Rundsendekanal zu senden, unter Zellträgern sind, und ein Träger, außer einem BCCH-Träger, unter allen Trägern einer Zelle ein Nicht-BCCH-Träger ist.

11. Vorrichtung nach Anspruch 10, wobei:
die Umschalteinheit (43) insbesondere zu Folgendem konfiguriert ist: wenn der BCCH-Träger der Bereitschaftszelle normal ist, eine Betriebs- und Wartungsverbindungs(OML, Operation and Maintenance Link)-Verbindung der Bereitschaftsvorrichtung der Bereitschaftszelle normal ist, eine A-Schnittstellenverbindung der Bereitschaftsvorrichtung normal ist, und die Bereitschaftsvorrichtung normal ist, Durchführen eines Umschaltens von dem aktiven Netzwerk zu dem Bereitschaftsnetzwerk, wenn eine der folgenden Situationen zutrifft: ein BCCH-Träger der aktiven Zelle ist fehlerhaft; der BCCH-Träger der aktiven Zelle ist normal, aber eine OML-Verbindung der aktiven Vorrichtung der aktiven Zelle ist fehlerhaft, und eine Verzögerungsschutzzeit für eine OML-Verbindungsunterbrechung läuft ab; und eine A-Schnittstellenverbindung der aktiven Vorrichtung ist fehlerhaft, und die aktive Vorrichtung ist fehlerhaft.

12. Vorrichtung nach einem der Ansprüche 10 bis 11, wobei die Konfigurationseinheit (54) den Nicht-BCCH-Träger der Bereitschaftszelle als einen Teilsatz von Nicht-BCCH-Trägern der aktiven Zelle konfiguriert.

13. Vorrichtung nach einem der Ansprüche 9 bis 12, wobei:
die aktive Vorrichtung und die Bereitschaftsvorrichtung unter Verwenden eines gleichen Kernnetzwerks verbunden sind, oder die aktive Vorrichtung und die Bereitschaftsvorrichtung unter Verwenden unterschiedlicher Kernnetzwerke verbunden sind.

14. Drahtloskommunikationssystem, umfassend eine aktive Basisstation (12), die konfiguriert ist, eine aktive Zelle (13) zu verwalten, eine Bereitschaftsbasisstation (15), die konfiguriert ist, eine Bereitschaftszelle (16) zu verwalten, und die Vorrichtung für eine duale Netzwerksicherung nach einem der Ansprüche 9 bis 13, wobei die Abdeckungsbereiche der aktiven Zelle und der Bereitschaftszelle dieselben sind, die aktive Basisstation durch eine aktive Basisstationssteuerung (11) verwaltet wird, und die Bereitschaftsbasisstation durch eine Bereitschaftsbasisstationssteuerung (14) verwaltet wird.

## Revendications

1. Procédé de secours à double réseau, comprenant :
la génération (21), par un dispositif (40) de secours à double réseau, d'une correspondance biunivoque entre une cellule active (13) et une cellule de réserve (16), les zones de couverture de la cellule active et de la cellule de réserve étant les mêmes, la cellule active étant gérée par une station de base active (12) qui est gérée par un contrôleur de station de base actif (11), et la cellule de réserve étant gérée par une station de base de réserve (15) qui est gérée par un contrôleur de station de base de réserve (14) ;
la permission (22), par le dispositif (40) de secours à double réseau, selon qu'un réseau courant est un réseau actif ou un réseau de réserve, à des supports correspondants de la cellule active et des supports correspondants de la cellule de réserve de fonctionner séparément ;
l'interrogation (23), par le dispositif (40) de secours à double réseau, d'un état de disponibilité de réseau, et
la réalisation (23), par le dispositif (40) de secours à double réseau, lorsqu'il est déterminé que l'état de disponibilité de réseau respecte une condition désignée, d'une commutation entre le réseau actif et le réseau de réserve,
ladite commutation faisant référence à une commutation entre des états de fonctionnement de la cellule active du réseau actif et de la cellule de réserve du réseau de réserve.

2. Procédé selon la revendication 1, le procédé comprenant en outre :
la configuration, par le dispositif (40) de secours à double réseau, de différents supports de canal de contrôle de diffusion, BCCH, pour la cellule active et la cellule de réserve, dans lequel les supports BCCH sont des supports, parmi les supports de cellule, qui sont utilisés pour envoyer un canal de diffusion, et un support, à l'exception d'un support BCCH, parmi tous les supports d'une cellule, est un support non-BCCH.

3. Procédé selon la revendication 2, dans lequel la permission (22), selon que le réseau courant est un réseau actif ou un réseau de réserve, à des supports correspondants de la cellule active et des supports correspondants de la cellule de réserve de fonctionner séparément comprend :
quand le réseau courant est le réseau actif, la permission, par le contrôleur de station de base actif, à tous les supports de la cellule active de fonctionner, et la permission, par le contrôleur de station de base de réserve, à un support BCCH de la cellule de réserve de fonctionner et à un support non-BCCH d'arrêter de fonctionner ; ou
quand le réseau courant est le réseau de réserve, la permission, par le contrôleur de station de base de réserve, à tous les supports de la cellule de réserve de fonctionner, et la permission, par le contrôleur de station de base actif, à tous les supports de la cellule active d'arrêter de fonctionner.

4. Procédé selon la revendication 3, dans lequel la réalisation (23), lorsqu'il est déterminé que l'état de disponibilité de réseau respecte une condition désignée, de la commutation entre le réseau actif et le réseau de réserve comprend :
quand le support BCCH de la cellule de réserve est normal, une liaison d'exploitation et de maintenance, OML, du contrôleur de station de base de réserve de la cellule réserve est normale, une liaison à interface A du contrôleur de station de base de réserve est normale, et le contrôleur de station de base de réserve est normal, la réalisation d'une commutation du réseau actif au réseau de réserve si une des situations suivantes est respectée : un support BCCH de la cellule active est défectueux ; le support BCCH de la cellule active est normal, mais une liaison OML du contrôleur de station de base actif de la cellule active est défectueuse, et un délai de protection pour interruption de liaison OML expire ; et une liaison à interface A du contrôleur de station de base actif est défectueuse, et le contrôleur de station de base actif est défectueux.

5. Procédé selon la revendication 4, dans lequel la réalisation (23) de la commutation du réseau actif au réseau de réserve comprend :
le lancement, par le contrôleur de station de base actif, d'un minuteur de commutation, la commutation d'un service de la cellule active à une cellule voisine de la cellule active, l'envoi d'une requête de commutation au contrôleur de station de base de réserve, et le lancement d'un minuteur d'attente de commutation ;
après réception de la requête de commutation, la permission, par le contrôleur de station de base de réserve, à tous les supports de la cellule de réserve de fonctionner, l'enregistrement d'une alarme de commutation, et l'envoi d'une réponse de commutation au contrôleur de station de base actif ; et
après réception de la réponse de commutation, l'arrêt, par le contrôleur de station de base actif, du minuteur d'attente de commutation, et l'enregistrement d'une alarme de commutation.

6. Procédé selon la revendication 3, dans lequel la réalisation (23), lorsqu'il est déterminé que l'état de disponibilité de réseau respecte une condition désignée, de la commutation entre le réseau actif et le réseau de réserve comprend :
la réalisation de la commutation du réseau de réserve au réseau actif quand le réseau de réserve fonctionne, un support BCCH de la cellule active est normal, une liaison OML du contrôleur de station de base actif de la cellule active est normale, et une liaison à interface A du contrôleur de station de base actif est normale.

7. Procédé selon l'une quelconque des revendications 2 à 6, le procédé comprenant en outre : la configuration du support non-BCCH de la cellule de réserve comme un sous-ensemble de supports non-BCCH de la cellule active.

8. Procédé selon l'une quelconque des revendications 1 à 7, dans lequel :
le contrôleur de station de base actif et le contrôleur de station de base de réserve sont connectés au moyen d'un même réseau central, ou bien le contrôleur de station de base actif et le contrôleur de station de base de réserve sont connectés au moyen de différents réseaux centraux.

9. Dispositif (40) de secours à double réseau, comprenant une unité de génération (41), une unité de contrôle (42), et une unité de commutation (43), dans lequel
l'unité de génération (41) est configurée pour générer une correspondance biunivoque entre une cellule active (13) et une cellule de réserve (16), les zones de couverture de la cellule active et de la cellule de réserve étant les mêmes, la cellule active étant gérée par une station de base active (12) qui est gérée par un contrôleur de station de base actif (11), et la cellule de réserve étant gérée par une station de base de réserve (15) qui est gérée par un contrôleur de station de base de réserve (14) ;
l'unité de contrôle (42) est configurée pour permettre, selon qu'un réseau courant est un réseau actif ou un réseau de réserve, à des supports correspondants de la cellule active et des supports correspondants de la cellule de réserve de fonctionnent séparément ; et
l'unité de commutation (43) est configurée pour : interroger un état de disponibilité de réseau ; et lorsqu'il est déterminé que l'état de disponibilité de réseau respecte une condition désignée, réaliser une commutation entre le réseau actif et le réseau de réserve,
ladite commutation faisant référence à une commutation entre des états de fonctionnement de la cellule active du réseau actif et de la cellule de réserve du réseau de réserve.

10. Dispositif selon la revendication 9, le dispositif comprenant en outre une unité de configuration, dans lequel
l'unité de configuration (54) est configurée pour configurer différents supports de canal de contrôle de diffusion, BCCH, pour la cellule active et la cellule de réserve, les supports BCCH étant des supports, parmi les supports de cellule, qui sont utilisés pour envoyer un canal de diffusion, et un support, à l'exception d'un support BCCH, parmi tous les supports d'une cellule est un support non-BCCH.

11. Dispositif selon la revendication 10, dans lequel :
l'unité de commutation (43) est spécifiquement configurée pour : quand le support BCCH de la cellule de réserve est normal, une liaison d'exploitation et de maintenance, OML, du dispositif de réserve de la cellule de réserve est normale, une liaison à interface A du dispositif de réserve est normale, et le dispositif de réserve est normal, réaliser une commutation du réseau actif au réseau de réserve si une des situations suivantes est respectée : un support BCCH de la cellule active est défectueux ; le support BCCH de la cellule active est normal, mais une liaison OML du dispositif actif de la cellule active est défectueuse, et un délai de protection pour interruption de liaison OML expire ; et une liaison à interface A du dispositif actif est défectueuse, et le dispositif actif est défectueux.

12. Dispositif selon l'une quelconque des revendications 10 à 11, dans lequel l'unité de configuration (54) configure le support non-BCCH de la cellule de réserve comme un sous-ensemble de supports non-BCCH de la cellule active.

13. Dispositif selon l'une quelconque des revendications 9 à 12, dans lequel :
le dispositif actif et le dispositif de réserve sont connectés au moyen d'un même réseau central, ou bien le dispositif actif et le dispositif de réserve sont connectés au moyen de différents réseaux centraux.

14. Système de communication sans fil, comprenant une station de base active (12) configurée pour gérer une cellule active (13), une station de base de réserve (15) configurée pour gérer une cellule de réserve (16), et le dispositif de secours à double réseau selon l'une quelconque des revendications 9 à 13, les zones de couverture de la cellule active et de la cellule de réserve étant les mêmes, la station de base active étant gérée par un contrôleur de station de base actif (11), et la station de base de réserve étant gérée par un contrôleur de station de base de réserve (14).
